# EUROPÄISCHE PATENTSCHRIFT

(11) **EP 0 450 192 B1**
(45) Veröffentlichungstag und Bekanntmachung des Hinweises auf die Patenterteilung: **18.05.1994**
(21) Anmeldenummer: 90125444.1
(22) Anmeldetag: 24.12.1990
(51) Int. Cl.: B60R 16/02

(54) **Kraftfahrzeugzusatzgerätesteuerungszentrale**
Central centre for vehicle auxiliary devices
Centrale de commande pour appareils auxiliaires de véhicule

(30) Priorität: 02.04.1990 DE 4010621
(43) Veröffentlichungstag der Anmeldung: 09.10.1991
(73) Patentinhaber: Blaupunkt-Werke GmbH, 31132 Hildesheim (DE)
(72) Erfinder: Altmann, Albrecht, W-3226 Sibbesse (DE); Eilers, Norbert, W-3200 Hildesheim (DE)

(56) Entgegenhaltungen:
- DE-A- 3 927 759
- PATENT ABSTRACTS OF JAPAN vol. 12, no. 113 (M-683)9. April 1988
- PATENT ABSTRACTS OF JAPAN vol. 11, no. 288 (E-542)17. September 1987

## Beschreibung

Gegenstand des Schutzrehts ist eine neue Zentrale für die Steuerung von Zusatzgeräten in Kraftfahrzeugen, deren Anzeige oder Bedienung die optische Aufmerksamkeit des Fahrers erfordern.

In der älteren deutschen Patentanmeldung DE-C-39 27 759 ist z. B. ein Cityrufempfänger beschrieben, auf dessen Display auch die Daten bezüglich der Einstellung eines Autoradios darstellbar sind. Das Display wird über einen Mikroprozessor angesteuert. Diese Mikroprozessorsteuerung kann man auch als den Kern einer Kraftfahrzeugzusatzgerätesteuerungszentrale ansehen. Daher ist hierauf Bezug genommen.

Wird auf diesem Display während der Fahrt ein neuer Cityruf angezeigt und befindet sich das Display am Rande des Wahrnehmungsbereiches des Fahrers, dann besteht die Vermutung, daß die Aufmerksamkeit des Fahrers durch diesen fremdgesteuerten dynamischen Vorgang angezogen wird. Eine solche Ablenkung seines Blickes kann sich ein Fahrer aber nicht in jeder Verkehrssituation leisten. Besonders gefährlich sind Verkehrssituationen bei hoher Geschwindigkeit.

Durch JP-A-62 086 978 ist es bekannt, diese Gefahr zu verringern, indem sichergestellt wird, daß das Bildrohr eines Fernsehgerätes bei Beendigung des Ruhezustandes des Fahrzeuges aus dem Blickfeld des Fahrers gedreht wird. Diese Lösung befriedigte die Erfinder jedoch nicht.

Neue Lösungen für eine Kraftfahrzeugzusatzgerätesteuerungszentrale sind durch die Merkmale des Anspruchs 1 bzw. des nebengeordneten Anspruchs 2 gekennzeichnet.

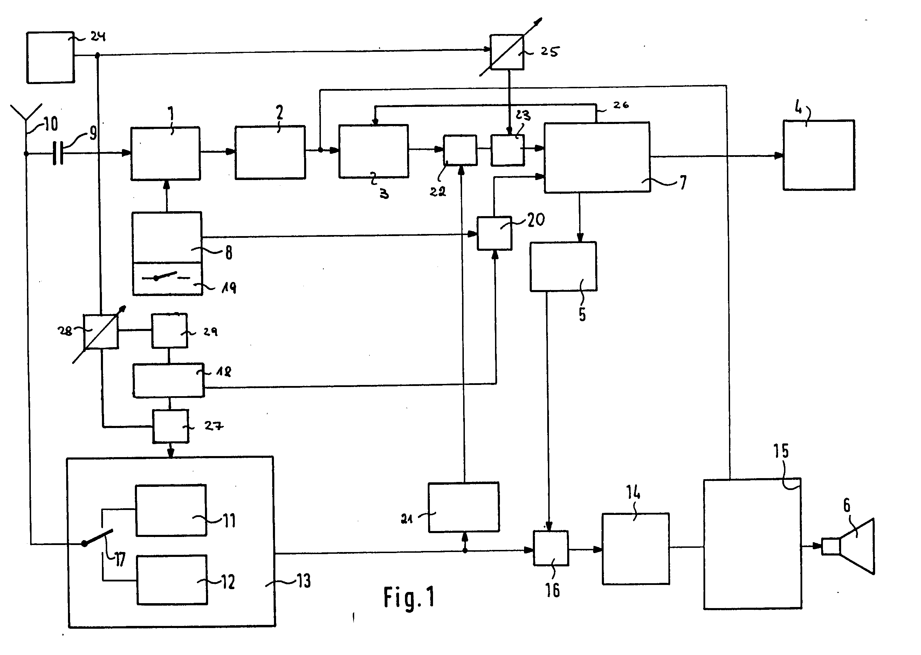

Anhand der Zeichnung werden zwei Ausführungsbeispiele der Erfindung näher erläutert.

Der als Ausführungsbeispiel der Erfindung dargestellte Cityrufempfänger besteht aus einem auf die Senderfrequenz abgestimmten Eingangskreis 1, einem Demodulator 2 für den Träger und einem Decoder 3.

Der Decoder 3 schaltet das Display 4 ein, sobald eine Nachricht eingeht, sofern nicht nur ein akustischer Ruf über den Ruftongenerator 5 und den Lautsprecher 6 ausgelöst werden soll. Bei der Decodierung wird die empfangene Nachricht im Decoder 3 in Zwischenspeichern festgehalten.

Der Eingang des Displays 4 ist mit einem Mikroprozessor 7 verbunden. Dieser Mikroprozessor 7 ist über seinen Eingang für fremdgesteuerte Daten einerseits mit dem Decoder 3, andererseits über einen zweiten Eingang für gerätegesteuerte Daten mit dem Bedienteil 8 des Cityrufempfängers verbunden. Das Ablaufprogramm des Mikroprozessors enthält unter anderem die einzelnen erforderlichen Schritte zur Steuerung der akustischen und optischen Anzeige der empfangenen Nachricht.

Der Cityrufempfänger ist über eine Kapazität 9 an eine Autoradioantenne 10 angekoppelt, an deren Fußpunkt auch der UKW-Eingangskreis 11 und der Mittelwelleneingangskreis 12 eines Tuners 13 des Autoradios angeschlossen sind.

Das an die Autoradioantenne 10 angeschlossene Autoradio umfaßt neben dem Tuner 13, der neben den bereits erwähnten Eingangskreisen auch Mischstufen und ZF-Stufen enthält, eine NF-Stufe 15 und einen dieser vorgeschalteten Lautstärkeregler 14.

Bei den handelsüblichen Autoradios wird beim Wechsel von UKW-Empfang auf Mittelwellenempfang der UKW-Eingangskreis vom Wellenschalter 17 abgeschaltet und der Mittelwelleneingangskreis eingeschaltet. Der Wellenschalter des Autoradios wird von dessen Bedienteil 18 gesteuert.

Der Tonruf des Cityrufempfängers wird über die Oderstufe 16 dem Lautstärkeregler 14 und die NF-Stufe 15 auf den Lautsprecher 6 des Autoradioteils gegeben, ohne daß zuvor eine Umschaltung des Eingangskreises von UKW auf Cityruf erfolgte. Damit gewährt der Besitzer eines Cityrufempfängers dem Empfang eines Cityrufs Vorrang vor dem Empfang eines Rundfunkprogramms, d. h. der Citytonruf darf den Rundfunkempfang ohne weiteres "stören".

Zur Darstellung der alphanumerischen Zeichen der empfangenen Nachricht dient, wie bereits erwähnt, das Display 4. Da die dargestellte Nachricht nach der Aufnahme durch den Besitzer des Empfängers ohne Interesse ist, ist ein Löschschalter 19 im Bedienteil 8 vorgesehen, der bei der Betätigung durch den Fahrer die Cityrufinformation löscht. Danach können über eine Oderstufe 20 und dem Eingang für gerätegesteuerte Daten am Mikroprozessor 7 die am Datenausgang des Bedienteils 18 des Autoradios anstehenden Daten über die Einstellung des Autoradios, wie die Frequenz des eingestellten Rundfunksenders und die betätigten Funktionen des Autoradios, auf dem Display 4 angezeigt werden. Diese Löschschaltung macht sich die Tatsache zunutze, daß die Cityrufinformationen nicht ständig empfangen werden, während die Betriebsdaten des Autoradios ständig verfügbar sind.

Ist in dem Autoradio ein RDS-Decoder 21 vorgesehen, der auch Paging-Verkehr erlaubt, dann kann das Display 4 auch für die über diesen RDS-Dienst übermittelten Informationen anzeigen. Zweckmäßigerweise wird dann der Ausgang des RDS-Decoders 21 über eine Oderstufe 22 mit dem Eingang des Mikroprozessors 7 für fremdgesteuerte Daten verbunden.

Eine erste erfindungsgemäße Weiterbildung des bisher beschriebenen Cityrufempfängers umfaßt eine Torschaltung 23 in dem soeben erwähnten Eingang des Mikroprozessors 7. Weiterhin gehört zur erfindungsgemäßen Ausgestaltung des Cityrufempfängers ein Sensor 24 für die Fahrzeuggeschwindigkeit. Solche Sensoren sind heute bei einer Anzahl von Geräten für die Motorsteuerung im Einsatz. Dem Ausgang des Sensors 24 ist eine Schwellwertstufe 25 nachgeschaltet, deren Schwellwert einstellbar ist.

Die Torschaltung 23 ist als NAND-Gatter ausgebildet. Sobald das Ausgangssignal des Sensors 24 den in der Schwellwertstufe 25 vorgegebenen Wert übersteigt, d. h. sobald die Geschwindigkeit des Fahrzeugs über eine vorgegebene Geschwindigkeit hinausgeht, wird die Torschaltung 23 blockiert. Die eingegangene Nachricht wird somit nicht auf dem Display dargestellt. Der Tonruf erreicht den Fahrer jedoch nach wie vor.

Sobald der Fahrer die Geschwindigkeit des Fahrzeugs unter den vorgegebenen Wert zurücknimmt, kann die in dem Zwischenspeicher im Decoder 3 enthaltene Nachricht auf Anforderung erneut ausgelesen werden. Für eine solche Aufforderung besteht eine Verbindungsleitung 26 zwischen dem Mikroprozessor 7 und dem Decoder 3.

Ein zweites Ausführungsbeispiel der Erfindung umfaßt eine Torschaltung 27 im Ausgang des Bedienteils 18 des Autoradios 13, welche über eine zweite Schwellwertstufe 28 an den Ausgang des Sensors 24 angeschlossen ist. Diese Torschaltung ist ebenfalls als NAND-Gatter ausgebildet. Dieses NAND-Gatter verhindert die Ausführung von Stellbefehlen, die manuell in das Bedienteil eingegeben werden, sobald das Fahrzeug die in der Schwellwertstufe 28 eingestellte Geschwindigkeit überschreitet. Um dies dem Fahrer zu signalisieren, ist zweckmäßigerweise auch ein Unterbrecher 29 im Beleuchtungskreis des Bedienteils 18 mit dem Ausgangssignal der Schwellwertstufe 28 derart steuerbar, daß die Beleuchtung erlischt, sobald der Geschwindigkeitswert überschritten wird.

## Patentansprüche

1. Kraftfahrzeugzusatzgerätesteuerungszentrale mit einem Sensor für die Fahrgeschwindigkeit des Kraftfahrzeuges und mit Zusatzgeräten, deren Anzeige die optische Aufmerksamkeit des Fahrers erfordern,
gekennzeichnet
durch eine einstellbare Schwellwertstufe (25) im Sensorkreis, an deren Ausgang oberhalb einer vorgegebenen Fahrgeschwindigkeit ein Schaltsignal abnehmbar ist und durch ein von diesem Schaltsignal gesteuertes NAND-Gatter (23) in der Zuleitung für fremdgesteuerte Daten zum Display (4) eines Zusatzgerätes.

2. Kraftfahrzeugzusatzgerätesteuerungszentrale mit einem Sensor für die Fahrgeschwindigkeit des Kraftfahrzeuges und mit Zusatzgeräten, deren Bedienung die optische Aufmerksamkeit des Fahrers erfordern,
gekennzeichnet
durch eine einstellbare Schwellwertstufe (28) im Sensorkreis, an deren Ausgang oberhalb einer vorgegebenen Fahrgeschwindigkeit ein Schaltsignal abnehmbar ist, und durch ein von diesem Schaltsignal gesteuertes NAND-Gatter (27) in der Ausgangsleitung eines manuell betätigten Bedienteils (18) eines Zusatzgerätes.

3. Zentrale nach Anspruch 2,
gekennzeichnet
durch einen von dem Schaltsignal des Schwellwertgliedes (28) gesteuerten Ein-/Ausschalter (29) im Beleuchtungskreis des Bedienteils (18).

## Claims

1. Motor-vehicle auxiliary equipment control centre with a sensor for the travelling speed of the motor vehicle and with items of auxiliary equipment requiring the visual attention the driver for their display, characterized by an adjustable threshold stage (25) in the sensor circuit, at the output of which stage a switching signal can be picked up above a predetermined travelling speed, and by a NAND gate (23), controlled by this switching signal, in the incoming line for externally controlled data to the display (4) of an item of auxiliary equipment.

2. Motor-vehicle auxiliary equipment control centre with a sensor for the travelling speed of the motor vehicle and with items of auxiliary equipment requiring the visual attention of the driver for their operator control, characterized by an adjustable threshold stage (28) in the sensor circuit, at the output of which stage a switching signal can be picked up above a predetermined travelling speed, and by a NAND gate (27), controlled by this switching signal, in the outgoing line of a manually actuated operator control section (18) of an item of auxiliary equipment.

3. Centre according to Claim 2, characterized by an on/off switch (29), controlled by the switching signal of the threshold element (28), in the illumination circuit of the operator control section (18).

## Revendications

1. Centrale de commande des appareilsaccessoires d'un véhicule automobile comprenant un capteur de vitesse du véhicule et des accessoires dont l'affichage nécessite l'attention visuelle du conducteur, centrale caractérisée par :
- un étage à seuil (25) réglable prévu dans le circuit du capteur et dont la sortie fournie un signal de commutation au-dessus d'une vitesse de déplacement prédéterminée, et par une porte NON-ET (23) commandée par ce signal de commutation dans la ligne d'alimentation pour des données de commande extérieures vers l'affichage (4) d'un appareil accessoire.

2. Centrale de commande des appareilsaccessoires d'un véhicule automobile comprenant un capteur de vitesse du véhicule et des accessoires dont l'affichage nécessite l'attention visuelle du conducteur, caractérisée par :
- un étage à seuil (28) réglage dans le circuit du capteur et dont la sortie fournit au-dessus d'une vitesse prédéterminée, un signal de commutation et par une porte NON-ET (27) commandée par ce signal de commutation dans la ligne de sortie d'une partie de manoeuvre (18) à commande manuelle d'un accessoire.

3. Centrale selon la revendication 2, caractérisée :
- par un commutateur marche/arrêt (29) commandé par le signal de commutation de l'élément à seuil (28), ce commutateur se trouvant dans le circuit d'éclairage de la partie de commande (18).
